# EUROPÄISCHE PATENTSCHRIFT

(11) **EP 1 916 161 B1**
(45) Veröffentlichungstag und Bekanntmachung des Hinweises auf die Patenterteilung: **12.01.2011**
(21) Anmeldenummer: 07118439.4
(22) Anmeldetag: 15.10.2007
(51) Int. Cl.: B60R 21/34, F02M 35/024, F02M 35/16

(54) **Filtersystem für eine Brennkraftmaschine in einem Kraftfahrzeug**
Filter system for an internal combustion engine in a motor vehicle
Système de filtration pour un moteur à combustion interne dans un véhicule automobile

(30) Priorität: 20.10.2006 DE 102006050473
(43) Veröffentlichungstag der Anmeldung: 30.04.2008
(73) Patentinhaber: MANN+HUMMEL GmbH, 71638 Ludwigsburg (DE)
(72) Erfinder: Waltenberg, Klaus, 71723 Großbottwar (DE); Zbiral, Robert, 71672 Marbach (DE)

(56) Entgegenhaltungen:
- EP-A- 0 892 169
- WO-A-2006/051072
- DE-A1- 10 314 220

## Beschreibung

### Technisches Gebiet

Die Erfindung betrifft ein Filtersystem für eine Brennkraftmaschine in einem Kraftfahrzeug nach den Merkmalen des unabhängigen Anspruches 1.

### Stand der Technik

Aus der DE 100 28 856 ist eine Filteranordnung bekannt, die unter einer Motorhaube angeordnet ist. Diese Filteranordnung hat eine Energieaufnahmestruktur, in welche der Frischluftzuführungskanal und die Filteranordnung räumlich integriert sind. Durch die Energieaufnahmestruktur wird der Aufprall eines Fußgängers bei einem Zusammenstoß gedämpft. Die Energieaufnahmestruktur gewährleistet zudem eine Reduzierung der Schallabstrahlung nach oben, so dass auf eine Geräuschdämmmatte im Bereich der Unterseite der Motorhaube verzichtet werden kann. Ein Nachteil bei der bekannten Anordnung besteht darin, dass durch die Struktur ein erheblicher Anteil von Filterraumvolumen verloren geht. Dieses Volumen ist erforderlich, um Schall dämmende Eigenschaften nach Art eines Helmholtz-Resonators zu erzielen.

Es ist ferner aus der DE 39 23 307 eine Motorhaube für einen Personenkraftwagen bekannt. Um eine Hutze für einen Frischlufteinlass im Bereich der Oberseite einer Motorhaube zu vermeiden und die durch die Hutze auftretenden Gefahren beim Aufprall eines Fußgängers zu reduzieren, ist ein Frischluftführungskanal einschließlich einer entsprechenden Filteranordnung an einer Unterseite der Außenhaut der Motorhaube angebracht. Allerdings besteht hierbei nur eine geringe Verbesserung des Aufprallschutzes.

Aus der WO 2006/051072 A1 ist ein Luftfiltergehäuse bekannt geworden, das als Skelettkorb aufgebaut ist und mit einer umlaufenden Folie abgedichtet ist.

Die DE 103 14 220 A1 offenbart eine Motorabdeckung mit einer Trägerstruktur, die zum Zweck des Fußgängerschutzes mit einem Schaumstoffkörper umschäumt ist.

Der Erfindung liegt die Aufgabe zugrunde, ein Filtersystem für eine Brennkraftmaschine in einem Kraftfahrzeug zu schaffen, das einen optimalen Fußgängeraufprallschutz unter der Motorhaube bildet und außerdem gewährleistet, dass die Motorhaube eine Deformierung weitergeben kann und optimal gedämpft wird.

### Offenbarung der Erfindung

Der wesentliche Vorteil der Erfindung liegt darin, dass das Filtersystem aus einem Gehäuseoberteil und einem Gehäuseunterteil besteht, wobei das Oberteil ein Stützgitter aufweist, welches mit einem Schaumstoffmaterial umschäumt ist und das Stützgitter eine Durchbiegung des Oberteils in Richtung Unterteil unter Krafteinwirkung gewährleistet.

Gemäß der Erfindung verläuft ein Stützrahmen längs des Verbindungsbereichs zwischen Oberteil und Unterteil. Dies bedeutet, dass dort, wo eine relativ formstabile Befestigungsstruktur erforderlich ist, dies durch den Stützrahmen erzielt wird und der Bereich des Oberteils, der lediglich Gehäusefunktionen aufweist, nachgiebig ist.

Außerdem weist der Stützrahmen eine wellenförmige Struktur auf, wobei diese Wellen während des Produktionsprozesses eine gute Verteilung des Schaumstoffmaterials gewährleisten, d. h. das Fließen des Materials vor dem Aushärtungsprozess und ein Umströmen des Stützrahmens wird gewährleistet.

In einer weiteren Ausgestaltung der Erfindung ist vorgesehen, das Oberteil mit so genannten Domen auszustatten, d. h. Stützzylinder, die sich zumindest teilweise bis zum Unterteil erstrecken und sich am Unterteil abstützen können. Diese Dome haben die Aufgabe, eine evtl. auf das Oberteil auswirkende Kraft aufzufangen und an das Unterteil weiterzugeben.

In einer besonderen Ausgestaltung bestehen sowohl Oberteil als auch Unterteil aus einem Polyurethanschaum. In vorteilhafter Weise beträgt die Schaumstärke der Deckelfläche 10 bis 20 mm.

Ein Filterelement ist bevorzugt zwischen Oberteil und Unterteil angeordnet. Dieses trennt den Reinluftbereich vom Rohluftbereich und bewirkt die Filtrierung der angesaugten Luft. Selbstverständlich können das Ober- und Unterteil auch als reine Resonanzkammer ausgestaltet sein, die lediglich Schall dämmende Eigenschaften besitzt.

In einer Ausgestaltung des Filterelementes besteht dieses aus einem schlauchförmigen Filter, wobei der Schlauch einen Stützkörper aufweist, um die Struktur des Schlauches auch bei großen Differenzdrücken zu erhalten.

Diese und weitere Merkmale gehen nicht nur aus den Patentansprüchen, sondern auch aus der Beschreibung und den Zeichnungen hervor.

### Kurze Beschreibung der Zeichnungen

Die Erfindung wird nachfolgend anhand von Ausführungsbeispielen näher erläutert. Es zeigt:
- Figur 1: ein Filtersystem für eine Brennkraftmaschine mit einem Ge- häuse in einer Außenansicht,
- Figur 2: das Teil des in Figur 1 dargestellten Gehäuses in der Innen- ansicht und
- Figur 3: ein Gesamtsystem in einer Außenansicht.

### Ausführungsform(en) der Erfindung

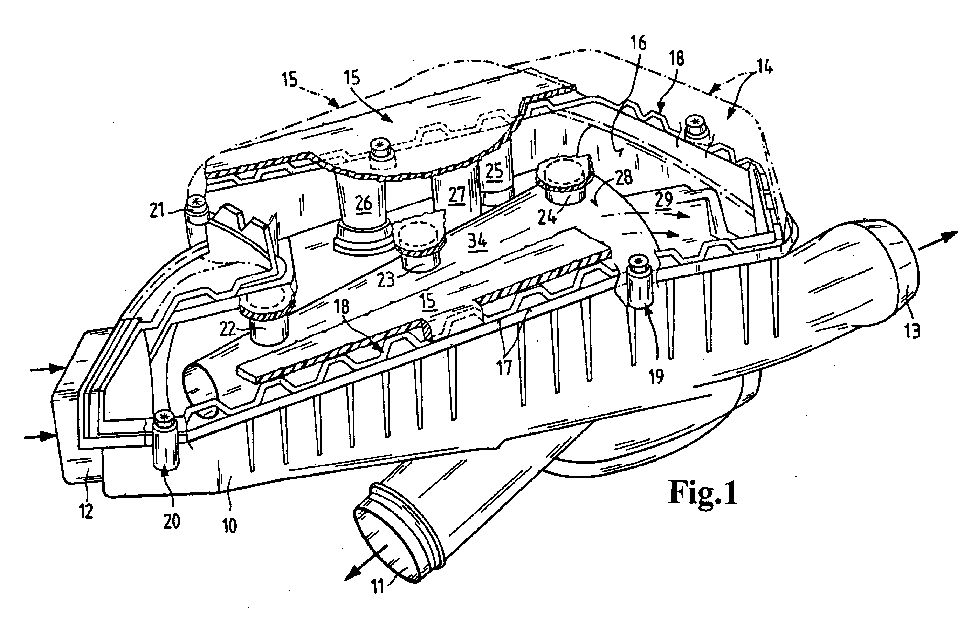

Das Filtersystem für eine Brennkraftmaschine gemäß Figur 1 besteht aus einem Unterteil 10, Anschluss 11 für die abgeleitete Reinluft und Anschluss 12 für die zugeführte Rohluft. In der hier gezeigten Darstellung ist ein weiterer Anschluss 13 für das Ableiten von Reinluft vorgesehen. Ein Oberteil 14 des Gehäuses ist gestrichelt dargestellt, um auch das Innere des Gehäuses zu erkennen. Dieses Oberteil besteht aus einem Schaumstoffmaterial, insbesondere einem Polyurethanschaum (PUR-MDI), die Deckelfläche 15 weist eine Materialstärke von etwa 10 bis 20 mm und die Seitenflächen 16 eine Materialstärke von etwa 8 mm auf. Im Bereich der Verbindungsebene 17, d. h. der Verbindung zwischen Oberteil 14 und Unterteil 10, befindet sich eine Dichtung. Innerhalb des Oberteils im Bereich der Verbindungsebene ist ein Stützrahmen 18 vorgesehen, der wellenförmig verläuft, und zwar einerseits - wie dargestellt - mit Stegen, die sich ausgehend von der Stützebene nach oben bzw. unten erstrecken, andererseits kann der Stützrahmen 18 auch längs der Verbindungsebene nach außen und nach innen verlaufend angeordnet sein, um beim Herstellen des Oberteils, d. h. beim Umschäumen des Stützrahmens, ein besseres Fließverhalten des Polyurethanschaums zu erzielen.

Wie bereits erwähnt, befindet sich der Stützrahmen 18 innerhalb der Seitenflächen 16 und wird damit vollumfänglich von dem Polyurethanschaum umschlossen. Die Verbindung zwischen Oberteil 14 und Unterteil 10 erfolgt mit geeigneten Schraubverbindungen 19, 20, 21, von denen drei gezeigt sind.

Das Oberteil ist, wie hier schematisch angedeutet, mit Domen 22, 23, 24, 25, 26, 27 ausgestattet, die sich nach innen erstrecken. Die Dome 22 und 23, 24 weisen eine relativ kurze Länge auf und erstrecken sich lediglich bis in den Bereich, in dem ein schlauchförmiges Filterelement 34 angeordnet ist, während die Dome 25, 26, 27 sich bis zum Boden des Unterteils 10 erstrecken.

Die zu reinigende Luft strömt über den Anschluss 12 in das Gehäuse, tritt durch die Außenhülle 28 des Filterelementes hindurch und verlässt über einen Reinluftkanal 29 und die Anschlüsse 11, 13 das Gehäuse.

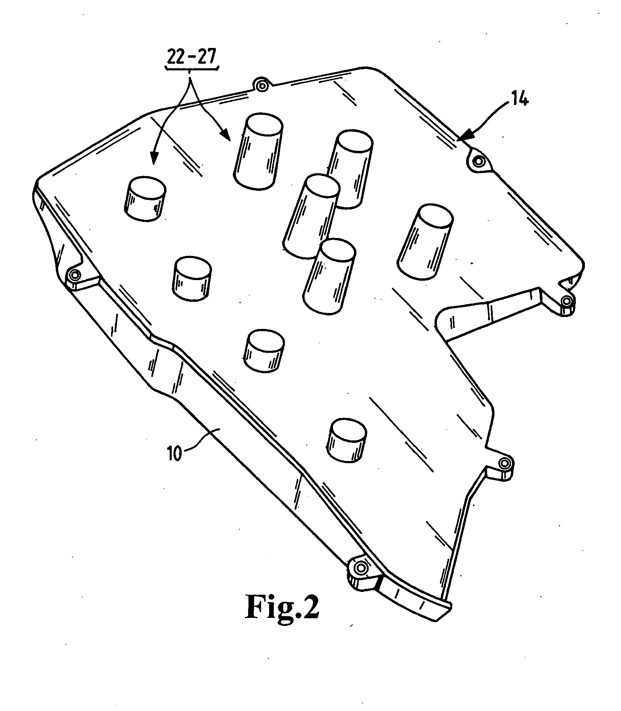

Figur 2 zeigt das Oberteil 14 von innen betrachtet. Gleiche Teile sind mit gleichen Bezugszeichen versehen. Hier sind wiederum die Dome zu erkennen, und zwar die Reihe, die sich oberhalb des Filterelementes 34 befindet und damit eine geringe Höhe aufweist sowie die Dome, die sich bis zum Boden des Unterteils erstrecken. Diese Dome haben die Aufgabe, bei einem Schlag auf das Oberteil 14 die Belastung aufzufangen, teilweise durch Zusammendrücken und Verformen zu absorbieren und teilweise an das Unterteil weiterzugeben, mit dem ebenfalls Bewegungsenergie aufgefangen und absorbiert wird. Durch die Ausgestaltung, d. h. durch die Dicke und die Anzahl der Dome kann eine optimale Dämmung des Aufpralls erzielt werden.

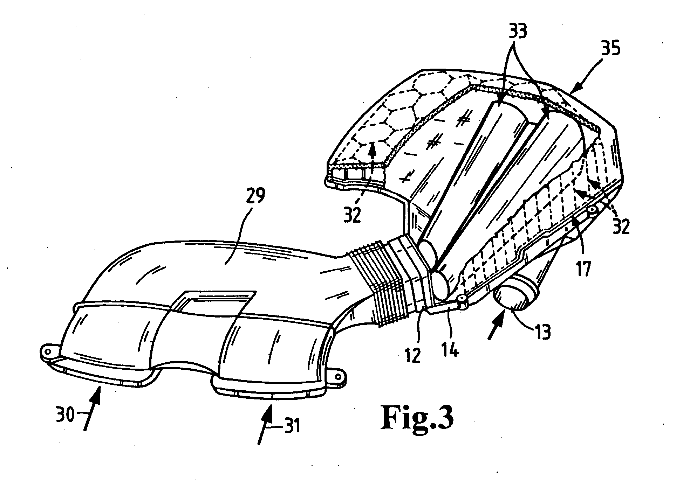

Figur 3 zeigt ein Gesamtsystem in der Außenansicht, bei dem nicht nur das Filtergehäuse dargestellt ist, sondern auch ein Rohluftkanal 29, der sich in zwei Rohlufteintritte 30, 31 aufspaltet. Üblicherweise befinden sich die Rohlufteintrittsöffnungen am Frontend eines Kraftfahrzeuges. Das Filtergehäuse 33 ist mit seinem Rohluftanschluss 12 und seinem Reinluftanschluss 13 dargestellt. Das Oberteil 35 zeigt in einer Variante zusätzlich zu den Domen oder anstelle von Domen ein Stützgitter 32, das in den PUR-Schaum eingebettet ist und hier nur zur besseren Darstellung als Gitter gestrichelt gezeichnet wurde. Das Stützgitter dient ebenfalls dazu, Energie, die durch einen Aufprall eingeleitet wird, zu absorbieren und einen Bruch des PUR-Schaums zu vermeiden.

## Patentansprüche

1. Filtersystem für eine Brennkraftmaschine in einem Kraftfahrzeug, bestehend aus einem Rohlufteintritt (12), einem Reinluftauslass (11), einem Gehäuse und einem darin angeordneten Filterelement, wobei das Gehäuse aus einem Unterteil (10) und einem Oberteil (14) besteht und das Oberteil (14) des Gehäuses ein Stützgitter (32) aufweist, welches mit einem Schaumstoffmaterial umschäumt ist, wobei das Stützgitter (32) und das Schaumstoffmaterial derart gestaltet sind, dass eine Durchbiegung des Oberteils in Richtung Unterteil unter Krafteinwirkung gewährleistet ist, wobei ein Stützrahmen (18) längs des Verbindungsbereichs zwischen Oberteil (14) und Unterteil (10) verläuft, wobei der Stützrahmen eine wellenförmige Struktur aufweist, wobei diese Wellen während des Produktionsprozesses eine gute Verteilung des Schaumstoffmaterials gewährleisten.

2. Filtersystem nach Anspruch 1, **dadurch gekennzeichnet, dass** der Stützrahmen eine wellenförmige Struktur aufweist und die Wellen derart verlaufen, dass sich die Wellentäler in Nähe der Verbindung zwischen Ober- und Unterteil und die Wellenberge in einem weiteren Abstand der Verbindung zwischen Ober- und Unterteil befinden.

3. Filtersystem nach Anspruch 2, **dadurch gekennzeichnet, dass** die wellenförmige Struktur durch eine weitere wellenförmige Struktur längs der Verbindungslinie zwischen Ober- und Unterteil überlagert wird.

4. Filtersystem nach einem der vorherigen Ansprüche, **dadurch gekennzeichnet, dass** das Oberteil (14) eine Struktur mit Deckelfläche (15) und Seitenflächen (16) aufweist, wobei die Deckelfläche (15) eine Materialstärke von 10 bis 20 mm und die Seitenflächen (16) eine Materialstärke im Bereich von 5 bis 10 mm aufweisen.

5. Filtersystem nach einem der vorherigen Ansprüche, **dadurch gekennzeichnet, dass** das Oberteil (14) auf das Unterteil (10) gerichtete Dome (22, 23, 24, 25, 26, 27) aufweist, die sich zumindest teilweise bis zum Unterteil erstrecken und sich dort am Unterteil abstützen.

6. Filtersystem nach einem der vorherigen Ansprüche, **dadurch gekennzeichnet, dass** das Oberteil und/oder das Unterteil aus einem Polyurethanschaum (PUR-MDI) besteht.

7. Filtersystem nach Anspruch 6, **dadurch gekennzeichnet, dass** der Polyurethan-Hartschaum mit einer Kunststofffolie überzogen ist.

8. Filtersystem nach einem der vorherigen Ansprüche, **dadurch gekennzeichnet, dass** zwischen Oberteil (14) und Unterteil (10) ein Filterelement (34) angeordnet ist, welches den Reinluftbereich von dem Rohluftbereich trennt und die Filtrierung der angesaugten Luft bewirkt.

9. Filtersystem nach Anspruch 8, **dadurch gekennzeichnet, dass** das Filterelement (34) ein schlauchförmiges Filterelement ist, insbesondere mit einem innerhalb des Schlauches angeordneten Stützkörper, wobei dieser Stützkörper nachgiebig ist.

## Claims

1. Filter system for an internal combustion engine in a motor vehicle, consisting of a raw air inlet (12), a clean air outlet (11), a housing and a filter element disposed therein, the housing consisting of a lower section (10) and an upper section (14) and the upper section (14) of the housing featuring a supporting grid (32) which is surrounded with a foamed material, the supporting grid (32) and the foamed material being designed such that a flexure of the upper section towards the lower section is ensured under the application of force, a supporting frame (18) extending along the joining area between the upper section (14) and the lower section (10), the supporting frame featuring a corrugated structure, these corrugations ensuring a good distribution of the foamed material during the production process.

2. Filter system according to claim 1, **characterized in that** the supporting frame features a corrugated structure and that the corrugations extend such that the corrugation troughs are near the joint between upper section and lower section and the corrugation peaks at a further distance of the joint between upper section and lower section.

3. Filter system according to claim 2, **characterized in that** the corrugated structure is superposed by another corrugated structure along the connecting line between upper section and lower section.

4. Filter system according to one of the above claims, **characterized in that** the upper section (14) features a structure with cover surface (15) and lateral surfaces (16), the cover surface (15) featuring a material thickness of 10 to 20 mm and the lateral surfaces (16) a material thickness within 5 to 10 mm.

5. Filter system according to one of the above claims, **characterized in that** the upper section (14) features domes (22, 23, 24, 25, 26, 27) pointing at the lower section (10) which at least partially extend to the lower section and are supported there by the lower section.

6. Filter system according to one of the above claims, **characterized in that** the upper section and/or the lower section are made of polyurethane foam (PURMDI).

7. Filter system according to claim 6, **characterized in that** the rigid polyurethane foam is covered by a plastic foil.

8. Filter system according to one of the above claims, **characterized in that** between upper section (14) and lower section (10) a filter element is disposed which separates the clean air area from the raw air area and ensures the filtration of the intake air.

9. Filter system according to claim 8, **characterized in that** the filter element (34) is a tubular filter element, in particular with a supporting element disposed inside the tube, this supporting element being flexible.

## Revendications

1. Système de filtre pour un moteur à combustion interne dans un véhicule automobile, composé d'une entrée d'air brut (12), d'une sortie d'air pur (11), d'un boîtier et d'un élément filtrant disposé dans ce dernier, le boîtier étant composé d'une partie inférieure (10) et d'une partie supérieure (14) et la partie supérieure (14) du boîtier présentant une grille d'appui (32) qui est enrobée de mousse, la grille d'appui (32) et la mousse étant conçues de telle manière qu'une flexion de la partie supérieure en direction de la partie inférieure, sous l'effet de force, soit garantie, un cadre de soutien (18) évoluant le long de la zone de jonction entre la partie supérieure (14) et la partie inférieure (10), le cadre de soutien présentant une structure ondulée, ces ondulations assurant pendant le processus de production une bonne répartition du matériau d'expansion.

2. Système de filtre selon la revendication 1, **caractérisé en ce que** le cadre de soutien présente une structure ondulée et que les ondulations évoluent de manière à ce que les creux des ondulations se situent à proximité de la jonction entre la partie supérieure et la partie inférieure et les sommets des ondulations se situent à une plus grande distance de la jonction entre la partie supérieure et la partie inférieure.

3. Système de filtre selon la revendication 2, **caractérisé en ce que** la structure ondulée est recouverte d'une autre structure ondulée le long de la ligne de jonction entre la partie supérieure et la partie inférieure.

4. Système de filtre selon l'une des revendications précédentes, **caractérisé en ce que** la partie supérieure (14) présente une structure avec une surface de couverture (15) et des surfaces latérales (16), la surface de couverture (15) ayant une épaisseur de matériau de 10 à 20 mm et les surfaces latérales (16) ayant une épaisseur de matériau de l'ordre de 5 à 10 mm.

5. Système de filtre selon l'une des revendications précédentes, **caractérisé en ce que** la partie supérieure (14) présente des broches (22, 23, 24, 25, 26, 27) orientées vers la partie inférieure (10) qui s'étendent au moins en partie jusqu'à la partie inférieure et s'appuient à cet endroit sur la partie inférieure.

6. Système de filtre selon l'une des revendications précédentes, **caractérisé en ce que** la partie supérieure et/ou la partie inférieure est/sont faite(s) de mousse polyuréthane (PUR-MDI).

7. Système de filtre selon la revendication 6, **caractérisé en ce que** la mousse polyuréthane dure est revêtue d'un film plastique.

8. Système de filtre selon l'une des revendications précédentes, **caractérisé en ce qu'**un élément filtrant (34) est disposé entre la partie supérieure (14) et la partie inférieure (10), lequel sépare la zone d'air pur de la zone d'air brut et provoque le filtrage de l'air aspiré.

9. Système de filtre selon la revendication 8, **caractérisé en ce que** l'élément filtrant (34) est un élément filtrant en forme de tuyau, notamment avec un corps d'appui placé dans le tuyau, ce corps d'appui étant flexible.
